# EUROPEAN PATENT SPECIFICATION

(11) **EP 1 915 792 B1**
(45) Date of publication and mention of the grant of the patent: **23.06.2010**
(21) Application number: 05794581.8
(22) Date of filing: 16.08.2005
(51) Int. Cl.: H01M 8/02, H01M 8/04, H01M 8/24

(54) **MONOPOLAR FUEL CELL**
MONOPOLARE BRENNSTOFFZELLE
PILE À COMBUSTIBLE MONOPOLAIRE

(43) Date of publication of application: 30.04.2008
(73) Proprietor: Fassina, Andrea, 30034 Mira (IT)
(72) Inventor: Fassina, Andrea, 30034 Mira (IT)
(74) Representative: Vinci, Marcello
(86) International application number: PCT/IT2005/000493
(87) International publication number: WO 2007/020664

(56) References cited:
- EP-A- 1 544 931
- WO-A-03/092105
- WO-A-2004/013923

## Description

This patent relates to fuel cells, and particularly concerns the fuel cells using hydrogen plus oxygen or air.

Fuel cells function on the basis of the chemical interaction between hydrogen and oxygen or air, together with an electrolyte or catalyst, thereby generating electricity, heat and water vapor.

A fuel cell mainly consists of two electrodes coupled together, with a gas-permeable electrolyte or catalyst membrane inserted between them. A flow of air containing oxygen is delivered to one of the two electrodes (the cathode), while hydrogen is delivered to the other (the anode).

The electrolyte or catalyst membrane makes the hydrogen atom separate into a proton and an electron, which take a different path with respect to the cathode, i.e. the hydrogen protons flow through the electrolyte or catalyst membrane, while the electrons are collected by the anode, generating a current that can be exploited before the electrons are returned to the cathode.

When they return to the cathode, the electrons combine with the oxygen in the air and with the hydrogen protons, giving rise to water molecules. Every fuel cell produces an electric current at approximately half a volt and a few amperes. Several fuel cells can be connected electrically in series to produce significant voltages for practical applications.

Fuel cells are also connected in series physically, so that the flow of reactant gases leaves one cell and enters the next. The gas that has moved through one cell without being used up in the chemical reaction can thereby be used in the next cell.

Since fuel cells are based on chemistry, not on combustion, their emissions are generally much lower than the emissions from combustion processes, so they are being appreciated and used more and more.

The efficiency of a fuel cell relies on the efficiency with which each atom of hydrogen is combined with each atom of oxygen.

To improve the interaction between the reactant gas (be it oxygen or hydrogen), the electrode and the electrolyte or catalyst membrane, these gases are delivered to the membrane in a serpentine flow pattern so as to evenly cover the surface of said membrane, keeping in contact with the electrode.

A *gas diffusion layer*, or GDL, is included between the membrane and the electrode so as to further improve the interaction between the single atoms of oxygen and the single atoms of hydrogen.

The electrodes currently used in the manufacture of fuel cells are made of a substantially flat metal, graphite or graphite-loaded plastic element with serpentine channels for the flow of the gases on both the sides coming into contact with the electrolyte or catalyst membrane.

In some solutions, each electrode has a serpentine channel on both sides so that it can be coupled with two electrolyte or catalyst membranes, and used in alternating series of electrodes and membranes.

Electrodes with serpentine channels are currently made out of specifically-shaped metal plates, on the surface(s) of which the serpentine shaping is obtained by milling, electro-discharge machining, melting, or by means of any other suitable procedure.

Said electrode manufacturing procedure takes a great deal of time both for the shaping of the electrode plates, and to create the serpentine channel, and it involves a great deal of waste material being removed from the plates to make the serpentine channel.

Moreover, the resulting electrodes have a considerable thickness and consequently also a considerable weight.

The electrodes also require further connection elements, both mechanical and for the flow of the fluid. In fact, the fluid is delivered to one edge of the electrode plate and leaves from another, and elements suitable for connecting them to the fluid circulating manifold, or to the adjacent electrodes, are applied or attached to said edges.

These connection elements demand special processes for their gas-tight manufacture, they involve far from negligible manufacturing costs, and they have to be applied correctly to guarantee the proper operation of the fuel cell.

To overcome all the aforementioned drawbacks, a new layered-module fuel cell has been designed and developed.

WO 03/092105 A relates to a stack of two fuel cells separated by a bipolar plate, each fuel cell comprising two units separated by a MEA, and wherein each unit comprises a monopolar end plate containing a plurality of channels, a non conductive gasket, a gas permeable diffusion medium and a MEA.

EP A 1 544 931 discloses a monopolar fuel cell stack comprising two current collectors separated by a plate element with serpentine slit.

The object of the new fuel cell is for each module in the fuel cell to take up less space than in known fuel cells with an equivalent output. Another object of the new fuel cell is to achieve the maximum efficiency of the air-oxygen/hydrogen exchange and a consequently greater efficiency of the system.

Another object of the new fuel cell is to enable each serpentine gas flow channel to serve two electrolyte or catalyst membranes.

Another object of the new fuel cell is to need fewer parts for its manufacture.

Another object of the new fuel cell is to need simple and easily manufactured parts for its construction.

Another object of the new fuel cell is not to need any costly processes for its manufacture or for the manufacture of its component parts.

Another object of the new fuel cell is to need a limited number of uncomplicated operations for its assembly.

Another object of the new fuel cell is to need only a few, straightforward operations and processes for its manufacture.

Another object of the new fuel cell is to require no specific linking or connection elements between the various single fuel cells coupled together.

These and other direct and complementary objects are achieved by the object of claim 1. The new fuel cell has layered monopolar modules, each of which includes at least one electrolyte or catalyst membrane, a gas diffusion layer and several plates suitable for being coupled together and complete with holes for enabling the flow of the hydrogen and the air-oxygen.

The electrolyte or catalyst membrane is a membrane suitable for promoting the separation of the hydrogen atoms into protons and electrons and for enabling the passage of gases, but not of liquids. The gas diffusion layer (or GDL) is a porous flat element suitable for promoting the capillary and homogeneous diffusion of the gas. Each plate is generically rectangular in shape and, depending on its specific function, is made of a rigid electrically-insulating material, or of a rigid electrically-insulating material coated with a conductive metal layer, or of a metal plate or sheet, or of a flexible sheet coated with a metal layer.

There are at least four holes in the plates for enabling the flow of the hydrogen and air-oxygen.

When the plates are piled one on top of the other, said holes are aligned so as to form two pairs of channels for the delivery and return of the combustible gas and combustion-supporting gas.

Further holes are provided, preferably near the corners of each plate, to enable the various plates to be centered, piled one over the other, and fixed together. These holes for centering and joining the plates are suitable for the passage of screws or other means for connecting and tightening the various plates coupled together.

The central area of the various plates, coming between the previously-mentioned gas flow holes, differs according to the type of plate.

A first plate, called the frame plate, has a central opening of a size sufficient to occupy a large central area coming between said gas flow holes, less a border for separating it from said holes.

A second plate, called the distribution plate, has its central area perforated with tiny holes lying very close to one another. These tiny holes occupy the same area as the central opening in the frame plate.

A layer of highly conductive metal can be provided on one of the two sides of said distribution plate, extending at least over the area covered by the holes, except for the holes themselves. Said highly conductive metal layer extends towards the edges of the plate and is connected to an electric connection terminal, thereby creating an electrical continuity between the various distribution plates, as well as to an electric test terminal so as to enable the operating parameters of each module in the fuel cell to be monitored.

Another plate, called the serpentine plate, has a shaped opening in the central area - coinciding with the central opening in the frame plate - that traces a serpentine flow pattern. Said serpentine channel links up with, and places in communication two or more of the gas flow holes. Two further types of plate are provided, called the end plate and the blind plate. The end plate only has the gas flow holes, while the blind plate is completely lacking any central openings or gas flow holes. The serpentine plates are designed to be larger than the others, or to have appendages on one of their longer sides suitable for serving as a fin to enable heat dispersion.

Each module in the new fuel cell is symmetrical with respect to the electrolyte or catalyst membrane and includes:
- a serpentine plate;
- a distribution plate;
- a frame plate;
- a gas diffusion layer the same size as the central opening in the frame plate;
- a catalyst membrane;
- a gas diffusion layer;
- a frame plate;
- a distribution plate;
- a serpentine plate.

To be more precise, two serpentine plates are used with a symmetrical serpentine channel so that the serpentine channel on each plate links up with a different pair of gas flow holes from those joined together by the serpentine channel on the other serpentine plate.

The electrolyte or catalyst membrane is slightly larger than the central opening in the frame plate so that it can be held in place by two adjacent frame plates.

The gas diffusion layer is the same size as the central opening in the frame plate and the same thickness as the frame plate, or slightly thicker.

The distribution plates are arranged with the metal layer facing towards the catalyst membrane and opposite the adjacent serpentine plate.

The distribution plate can be made without the highly conductive metal layer, in which case a sheet of flexible electrically-insulating material is used, that is perforated with tiny holes in exactly the same way as the distribution plates coated with a highly conductive metal layer. Said sheet of insulating material is placed between the distribution plate and the catalyst membrane in exactly the same way, with the metal layer facing towards said catalyst membrane.

Either way, it is preferable to couple several plates in multiples of the sequence illustrated, complete with an end plate and a blind plate, so that each serpentine plate is coupled with two distribution plates and serves two adjacent fuel cell modules.

Provision can be made for a film, with a hole in the central area, to be inserted as a gasket between the various plates.

The two end and blind plates are placed in the two outermost positions, enclosing and containing all the other plates.

The electric terminals connecting the various distribution plates are connected together so that each distribution plate is connected not to the distribution plate sharing the same membrane, but to the subsequent distribution plate. In other words, the distribution plates are connected together alternately, two by two, the plates in even-numbered positions with other plates in even-numbered positions (the 2^{nd} with the 4^{th}, the 6^{th} with the 8^{th}, and so on) and the distribution plates in odd-numbered positions with distribution plates in odd-numbered positions (the 3^{rd} with the 5^{th}, the 7^{th} with the 9^{th}, and so on). The final, first and last but one, distribution plates are connected to the terminals of the device that uses the electric current generated.

In addition to said contact terminals, there are electric test terminals on the distribution plate that can be connected, permanently or as and when necessary, with instrumentation for monitoring the operating parameters of the single fuel cell modules.

The above-described plates can be made of a similar material, they may be of limited thickness, in shapes obtained by numerical control cutting or die-cutting processes.

The new fuel cell, as described above, has limited overall dimensions because each combustible and combustion-supporting gas diffusion channel simultaneously serves two membranes.

The new fuel cell, as described above, uses elements, i.e. plates, of very limited thickness, so the assembly of the various elements, i.e. the plates, forming a fuel cell module has much smaller overall dimensions than in the fuel cells of known type.

The characteristics of the new layered-module fuel cell will be better clarified by the following description with reference to the attached drawings, which are provided as a non-restrictive example.

Each layered module in the new fuel cell includes an electrolyte or catalyst membrane (1), a gas diffusion layer (2), and plates (3, 4, 5, 6, 7).

The electrolyte or catalyst membrane (1) is a membrane suitable for promoting the separation of the hydrogen atoms into protons and electrons and for enabling the passage of gases, but not of liquids. Said electrolyte or catalyst membrane (1) is slightly larger than the central opening (3.1) in the frame plate (3), described below, so that it can be held in place by two frame plates (3) coupled together, and it has a thickness of around a few hundredths of a millimeter.

The gas diffusion layer (2), or GDL, is a flat porous element suitable for promoting the even and capillary diffusion of the gas. Said gas diffusion layer (2) is preferably composed of a fabric having the necessary characteristics, and is the same size as the central opening (3.1) in the frame plate (3), described below, and is the same thickness, or slightly thicker than said frame plate (3).

The various plates (3, 4, 5, 6) are generically rectangular in shape, with four holes (A', A", B', B") for enabling the flow of hydrogen (A', A") and air-oxygen (B', B"). Provision can be made for the holes for the air-oxygen flow (B', B") to be slightly larger than the holes for the hydrogen flow (A', A").

When the plates (3, 4, 5, 6) are layered one on top of the other, said holes (A', A", B', B") form two pairs of channels (A'-A", B'-B") for the delivery and return of the combustible gas (A', A") and of the combustion-supporting gas (B', B").

Further holes (C) are provided near the four corners of each plate (3, 4, 5, 7) for enabling and facilitating the centering, layering and assembly of the various plates (3, 4, 5).

One plate (3), hereinafter called the frame plate (3), has a rectangular central opening (3.1), dimensioned so as to occupy almost all of the area coming between said four gas flow holes (A', A", B', B"), less a rim for separating the opening from said four holes (A', A", B', B"). Said frame plate (3) is preferably made of vetronite, bakelite or other like material and is around a few tenths of a millimeter thick.

A second plate, called the distribution plate (4), has a central area perforated with tiny holes (4.1) lying very close to one another. Said tiny holes (4.1) cover the same area as the central opening (3.1) in the frame plate (3).

A layer of highly conductive metal (4.2), such as platinum or gold, is deposited or otherwise applied on one of the two sides of said distribution plate (4), extending at least over the whole area covered by the holes (4.1), except for the holes (4.1) themselves. Said highly conductive metal layer (4.2) extend towards the edges of the plate and is connected to an electric connection terminal (4.3c) and an electric test terminal (4.3t), preferably situated on one or both the shorter sides of the plate (4), to enable the electrical connection between the various distribution plates (4) and the monitoring of the operating parameters of the single fuel cell modules.

Said distribution plate (4) may be conveniently made of vetronite or bakelite, for instance, coated with platinum or gold, rather like a printed circuit board, and cut, shaped and perforated to obtain the above-described shape. To be more precise, said board is rectangular in shape and is perforated like the other plates (3, 5), but it has two tabs on one or two sides that constitute the electric connection terminal (4.3c) and the electric test terminal (4.3t).

Another plate, called the serpentine plate (5), has a shaped opening that traces a serpentine pattern (5.1) in the central area corresponding to the central opening (3.1) in the frame plate (3). Said serpentine-shaped opening (5.1) links up with and places in communication two (A'-A", B'-B") of the four gas flow holes (A', A", B', B") and, to be more specific, two of the holes that are not diagonally opposite one another (A'-A", B'-B").

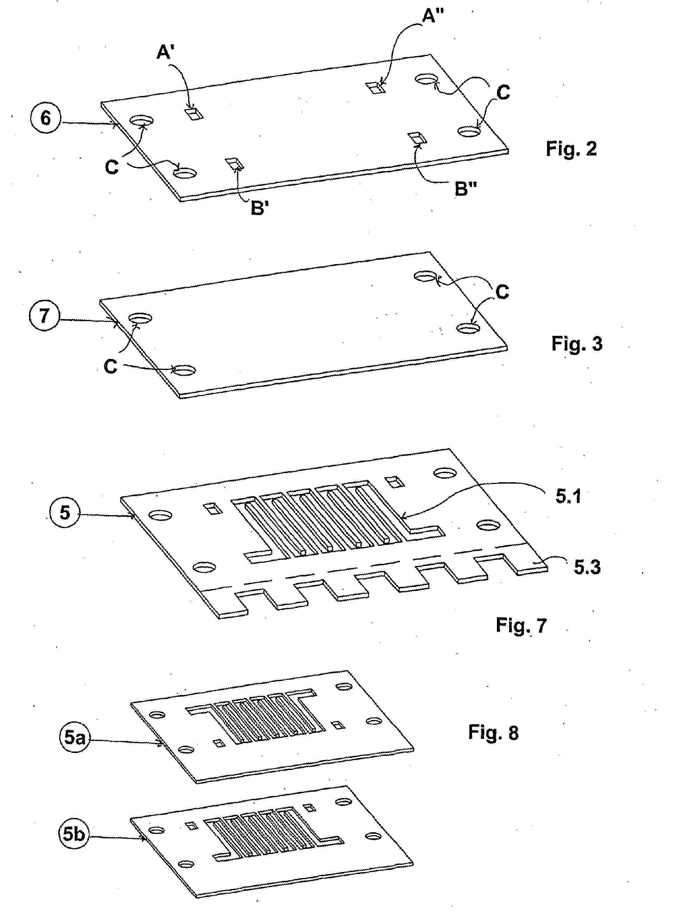

The shorter side of said serpentine plate (5) is longer than the shorter sides of the other plates (3, 4) so that, when it is assembled with the other plates (3, 4), its edge (5.2) extends beyond the other plates (3, 4). Said edge (5.2) may be toothed or serrated (5.3) (figure 7).

The serpentine plate (5) is made in two similar versions (5a, 5b), with the serpentine-shaped opening (5.1) connecting one pair of holes (A', A") or the other (B', B").

Said serpentine plate (5) can conveniently be made, for instance, of metal sheet or other heat-conducting material, about a few tenths of a millimeter thick, and cut, die-cut or obtained by chemical cutting. Another plate, called the end plate (6), illustrated in figure 2, only contains the gas flow holes (A', A", B', B") and the holes for centering and assembling the plates (C).

Another plate, called the blind plate (7), illustrated in figure 3, only has the plate centering and assembly holes (C).

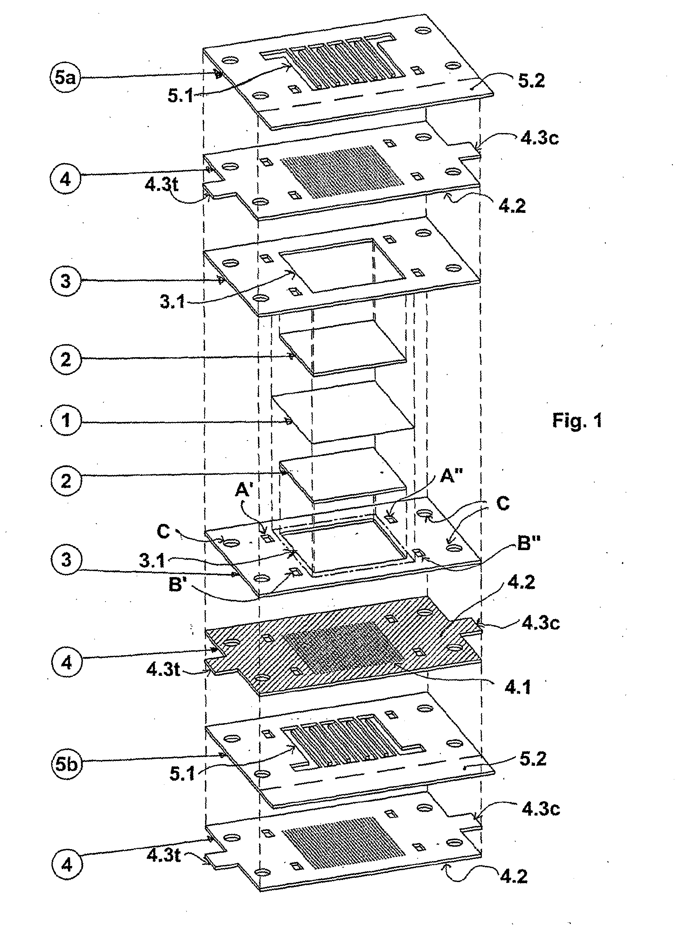

Each layered module in the new fuel cell is symmetrical with respect to the electrolyte or catalyst membrane (1) (figure 1) and includes :
- a serpentine plate (5a);
- a distribution plate (4);
- a frame plate (3);
- a gas diffusion layer (2);
- a catalyst membrane (1);
- a gas diffusion layer (2);
- a frame plate (3);
- a distribution plate (4);
- a serpentine plate (5b).

The electrolyte or catalyst membrane (1) is contained between and held in place by two frame plates (3), so that the whole of the central opening (3.1) in the frame plate (3) is occupied by said electrolyte or catalyst membrane (1).

The gas diffusion layer (2) is inserted in said central opening (3.1) in the frame plates (3) so as to fit completely and precisely inside said central opening (3.1) in the frame plate (3) and to cover the corresponding portion of the electrolyte or catalyst membrane (1).

A serpentine plate (5) is placed over each frame plate (3) and, to be more precise, a serpentine plate (5a) linking the holes for the hydrogen flow (A', A") is placed on one side of the set of plates (3, 4), while a complementary serpentine plate (5b) linking the holes for the air-oxygen flow (B', B") is placed on the other side of the set of plates (3, 4). The edges (5.2) of the serpentine plates (5) conveniently all project from the same side of the assembled set of plates (3, 4, 5).

Said serpentine plates (5) are subsequently coupled, on each side, with another distribution plate (4) and frame plate (3), with a gas diffusion layer (2) and an electrolyte or catalyst membrane (1), repeating the sequence as many times as necessary to obtain the required number of fuel cell modules.

An end plate (6) and a blind plate (7) are added on the two sides of the fuel cell modules obtained in this way.

Screws or other suitable mechanical means are inserted through the centering and assembly holes (C) to align, join and press all the plates (3, 4, 5, 6, 7), the electrolyte membranes or catalysts (1) and the gas diffusion layers (2) together.

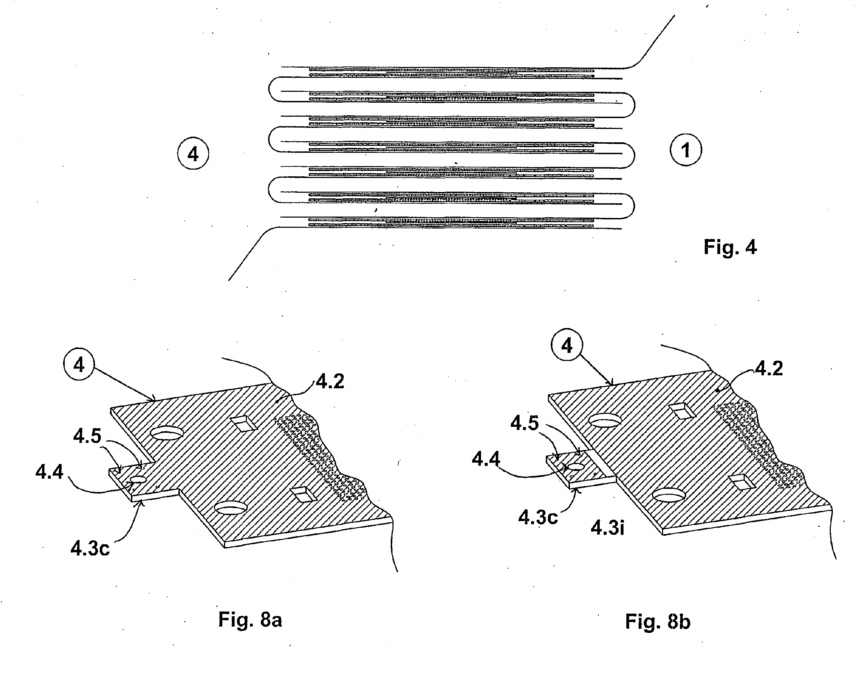

Provision can be made for the above-described operation to take place in reverse order, i.e. the plates (3, 4, 5, 6, 7), the electrolyte membranes or catalysts (1) and the gas diffusion layers (2) can be threaded onto the screws or other fixing means in the above-described sequence. Provision can be made to have a film, with a hole in the central area, inserted to serve as a gasket between the various plates (3, 4, 5, 6, 7). The electric terminals (4.3c) for connecting the various distribution plates (4) are connected together so that each distribution plate (4) is connected not to the next distribution plate (4a), but to the next but one distribution plate (4b). In other words, they are connected together alternately, two by two, the even-numbered distribution plates (4) with even-numbered distribution plates (4) (the 2^{nd} with the 4^{th}, the 6^{th} with the 8^{th}, and so on) and the odd-numbered distribution plates (4) with odd-numbered distribution plates (4) (the 3^{rd} with the 5^{th}, the 7^{th} with the 9^{th}, and so on), while the final, first and last but one distribution plates (4) are connected to the terminals of the device using the electric current generated, as illustrated in figure 4.

One embodiment of the invention involves the distribution plate (4) having no highly conductive metal layer (4.2).

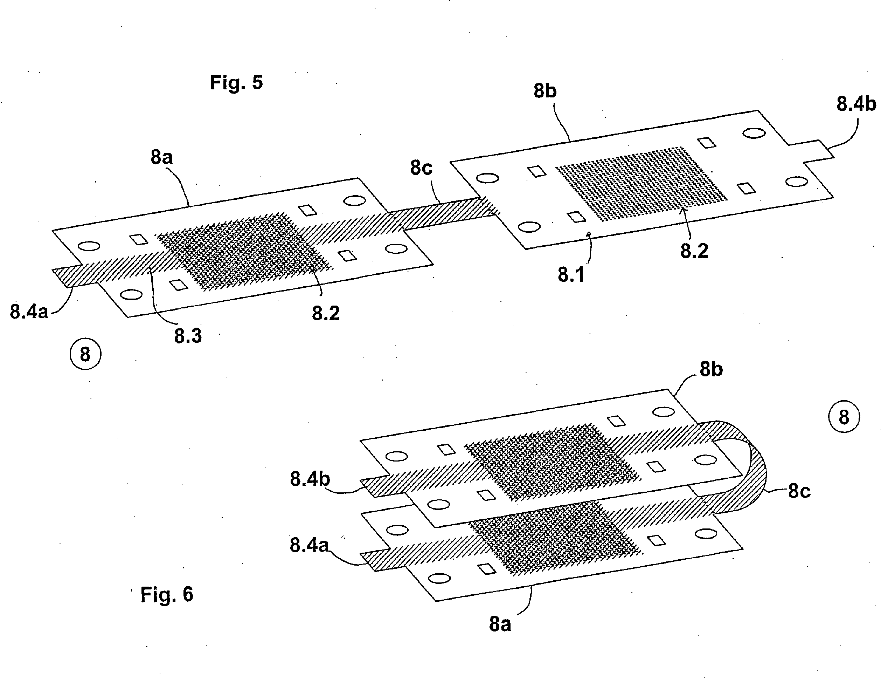

In this case, an additional element (8), illustrated in figure 5, is used, consisting of a sheet of flexible electrically-insulating material (8.1), perforated with tiny holes in the middle (8.2) in exactly the same way as the distribution plate (4), coated with a highly conductive metal layer (8.3).

Said additional element (8) is preferably made of Kapton or the like and is around a few tenths of a millimeter thick, while the metal layer (8.3) is made of platinum or gold.

Said additional element (8) is preferably made double, i.e. it consists of two perforated portions or sheets (8a, 8b) corresponding to the shape of the distribution plate (4), joined together by a band or strip (8c).

The additional element (8) also has two tabs (8.4a, 8.4b) corresponding to the electric test terminals on the previously-described distribution plate (4) complete with a metal layer (4.2), while the connection terminals are replaced by the connection band or strip (8c).

The highly conductive metal layer (8.3) is double, and is placed on one side of a sheet (8a), extending over the connection band or strip (8c) and the tab (8.4a), and on the other side of the other sheet (8b), again extending over the connection band or strip (8c) and the tab (8.4b). Metal-coated holes are provided and/or created in said connection band or strip (8c) so as to create a contact between the two metal layers (8.3) on the two sides (a, b).

The additional element (8), constructed in this way, is nonetheless also coupled with two distribution plates (4) without a metal layer (4.2), which serve as mechanical support for the additional element (8).

Said additional element (8) is bent at the connection band or strip (8c), as shown in figure 6, and used for two fuel cell modules.

The new fuel cell, constructed in this way, uses the same serpentine plate (5) for two catalyst membranes (1) in two adjacent fuel cell modules, without any plates or separator elements (6, 7) between the various modules, so fewer plates are used than in known fuel cells and, as a result, the new fuel cell takes up less space than the known fuel cells.

Another embodiment of the invention, illustrated in figures 8a and 8b, involves the distribution plate (4) being coated on both sides with a highly conductive metal layer (4.2) extending as far as the connection terminal (4.3c). In this case, there is a central hole (4.4) in the connection terminals (4.3c) and one or more metal-coated holes (4.5) or other suitable means for electrically connecting the metal layers (4.2) on the two sides of said connection terminals (4.3c); moreover, the metal layer (4.2) on the side opposite the membrane (1) is interrupted (4.2i) in the vicinity of said connection terminal (4.3c).

The distribution plates (4) obtained in this way are coupled with the other plates (3, 5, 6, 7) and the connection between the distribution plates (4) is obtained, for instance, by means of screws or rivets inserted in the holes in the connection terminals (4.3c) and washers inserted between the connection terminals (4.3c).

The new fuel cell thus obtained uses elements, i.e. plates (3, 4, 5, 6, 7), of a very limited thickness, so the assembly of the various elements, or plates (3, 4, 5, 6, 7), forming a fuel cell module has much smaller overall dimensions than known fuel cells.

The new fuel cell constructed in this way also has a higher output because the gas circulating in each serpentine plate (5), serving two membranes (1), combines better with the gas, in chemical terms, than in known fuel cells of equivalent overall dimensions.

The following claims are therefore advanced, with reference to the previous description and the attached drawings.

## Claims

1. Fuel cell with layered modules, each of which consists of an electrolyte or catalyst membrane (1) with, on each side, a gas diffusion layer (2), a distribution plate (4, 8) serving as an electrode, and at least one gas distributor element (5) suitable for making the gas flow over the surface of the gas diffusion layer (2) and over the entire membrane (1), and wherein each module is coupled with identical modules, **characterized in that** the various plates have at least two holes (a', a") for the combustible gas flow, and at least two holes (b', b") for the combustion-supporting gas flow, and when the plates (3, 4, 5) are layered one over the other, the holes (a', a", b', b") form pairs of channels (a'-a", b'-b") for the delivery and return of the combustible gas (a', a") and combustion-supporting gas (b', b"), and each fuel cell module includes, on each side of said electrolyte or catalyst membrane (1):
• said gas diffusion layer (2);
• a frame plate (3);
• said distribution plate (4), which is perforated with tiny holes (4.1) in the area corresponding to the central opening (3.1) in the frame plate (3);
• said gas distribution element (5), which comprises one serpentine pattern or channel (5.1) opened onto the two sides of said serpentine plate (5) and coinciding with the central opening (3.1) in the frame plate (3), and wherein said serpentine channel (5.1) links up with and places in communication at least two (a'-a", b'-b") of the gas flow holes (a', a", b', b"), said gas distribution element (5) serving two of said distribution plates (4), one on either side, and consequently also two gas diffusion layers (2) and two electrolyte or catalyst membranes (1) in two adjacent modules;
and wherein said gas distribution element (5) is wider in one direction than the other plates (3, 4) so that, when it is coupled with the other plates (3, 4), it has one edge (5.2) projecting from the other plates (3, 4), said projecting edge (5.2) being toothed or serrated (5.3).

2. Fuel cell with layered modules, as in claim 1, **characterized in that** the frame plate (3) has a rectangular central opening (3.1) dimensioned so as to occupy the area coming between said gas flow holes (A', A", B', B"), and wherein said central opening (3.1) is designed to enable access to almost the entire surface of the membrane (1) placed in between and held in place by the two frame plates (3), and to contain the gas diffusion layer (2).

3. Fuel cell with layered modules, as in claim 2, **characterized in that** the frame plate (3) is preferably made of vetronite, bakelite or other like material and is around a few tenths of a millimeter thick.

4. Fuel cell with layered modules, as in claim 1, **characterized in that** the distribution plate (4) is perforated with tiny holes (4.1) in the area corresponding to the central opening (3.1) in the frame plate (3), and wherein said distribution plate (4) has a highly conductive metal layer (4.2) on the side facing towards the membrane (1) and extending at least over the area covered with holes (4.1), and wherein said highly conductive metal layer (4.2) is connected to at least one electrical connection terminal (4.3c).

5. Fuel cell with layered modules, as in claim 4, **characterized in that** the conductive metal layer (4.2) is connected to an electrical test terminal (4.3t).

6. Fuel cell with layered modules, as in claims 4, 5, **characterized in that** said contact terminals (4.3c) and/or test terminals (4.3t) are preferably situated on one or both of the shorter sides of the plate (4).

7. Fuel cell with layered modules, as in claims 4, 5, 6, **characterized in that** said distribution plate (4) is made of an electrically insulating material coated with platinum, gold or other conductive metal.

8. Fuel cell with layered modules, as in claims 4, 5, 6, **characterized in that** said distribution plate (4) has both sides of the connection terminal (4.3c) coated with conductive metal (4.2), and wherein said connection terminals have at least one central hole (4.4) and metal-coated holes (4.5) assuring contact between the coatings (4.2) on the two sides of said terminals (4.3c), and wherein the connection between the various distribution plates (4) is assured by means of connection elements provided and held tightly between the connection terminals (4.3c) on said distribution plates (4).

9. Fuel cell with layered modules, as in claim 1, **characterized in that** said distribution plate (4) has no highly conductive metal layer (4.2) and said fuel cell comprises an additional element (8) consisting of a sheet of flexible electrically-insulating material (8.1), perforated with tiny holes in the middle (8.2) in exactly the same way as said distribution plate (4), coated with a highly conductive metal layer (8.3), said additional element (8) being made double, i.e. it consists of two perforated portions or sheets (8a, 8b) corresponding to the shape of said distribution plate (4), joined together by a band or strip (8c), with two tabs (8.4a, 8.4b) situated on a shorter side of the additional element(s) and opposite to the band or strip (8c) and wherein said highly conductive metal layer (8.3) is double, and is placed on one side of a sheet (8a), extending over the connection band or strip (8c) and the tab (8.4a), and on the other side of the other sheet (8b), again extending over the connection band or strip (8c) and the tab (8.4b), metal-coated holes being provided and/or created in said connection band or strip (8c) so as to create a contact between the two metal layers (8.3) on the two sides (a, b), and wherein said additional element (8) is coupled with two distribution plates (4), said additional element (8) being bent at the connection band or strip (8c) and used for two fuel cell modules, so as the same serpentine plate (5) serves two catalyst membranes (1) in two adjacent fuel cell modules, without any plates or separator elements (6, 7) between the various modules.

10. Fuel cell with layered modules, as in claim ***1*, characterized in that** said gas flow holes (A', A", B', B") connected via the serpentine channel (5.1) are not diagonally opposite one another (A'-A", B'-B").

11. Fuel cell with layered modules, as in claims 1, 10, **characterized in that** the serpentine plate (5) is made of a sheet of metal or other heat-conducting material with an approximate thickness of a few tenths of a millimeter.

12. Fuel cell with layered modules, as in previous claims, **characterized in that** it includes a further end plate (6), which only contains the holes (A', A") for the combustible gas flow and the holes (B', B") for the combustion-supporting gas flow, and wherein said holes (A', A") and (B', B") are respectively aligned with said holes (A', A") and (B'-B") of said plates (3, 4, 5) of the fuel cell module.

13. Fuel cell with layered modules, as in previous claims, **characterized in that** it includes a further blind plate (7) without the gas flow holes (A', A", B', B").

14. Fuel cell with layered modules, as in previous claims, **characterized in that** the plates (3, 4, 5, 6, 7) have holes (C) at the corners designed to enable and facilitate the centering of said various plates (3, 4, 5, 6, 7) and the insertion of mechanical means for making said plates (3, 4, 5, 6, 7) adhere perfectly to one another.

15. Fuel cell with layered modules, as in previous claims, **characterized in that** it has a film with a hole in the middle serving as a gasket inserted between each pair of said plates (3, 4, 5, 6, 7).

## Patentansprüche

1. Brennstoffzelle mit schichtweise angeordneten Modulen, von denen jedes aus einem Elektrolyten oder einer Katalysatormembran (1) besteht, die an jeder Seite eine Gasdiffusionsschicht (2), eine als Elektrode dienende Verteilerplatte (4, 8) und wenigstens ein Gasverteilungselement (5) aufweisen, welches geeignet ist, das Gas über die Oberfläche der Gasdiffusionsschicht (2) und über die gesamte Membran (1) strömen zu lassen, und wobei jedes Modul mit identischen Modulen verbunden ist, **dadurch gekennzeichnet, dass** die einzelnen Platten wenigstens zwei Bohrungen (a', a") für den Brenngasstrom aufweisen und wenigstens zwei Bohrungen (b', b") für den Strom des die Verbrennung fördernden Gases haben, und wenn die Platten (3, 4, 5) übereinander geschichtet sind, die Bohrungen (a', a", b', b") Kanalpaare (a'-a", b'-b") für den Zu- und Rückfluss des Brenngases (a', a") und des die Verbrennung fördernden Gases (b', b") bilden, und jedes Brennstoffzellenmodul an jeder Seite des besagten Elektrolyten bzw. der besagten Katalysatormembran (1) Folgendes umschließt:
• die besagte Gasdiffusionsschicht (2);
• eine Rahmenplatte (3);
• die besagte Verteilerplatte (4), die im der mittleren Öffnung (3.1) in der Rahmenplatte (3) entsprechenden Bereich mit kleinen Löchern (4.1) perforiert ist;
• das besagte Gasverteilungselement (5), das ein Serpentinenmuster oder Kanal (5.1) aufweist, welches an den beiden Seiten der besagten Serpentinenplatte (5) offen ist und mit der mittleren Öffnung (3.1) in der Rahmenplatte (3) zusammenfällt, und wobei der besagte Serpentinenkanal (5.1) mit wenigstens zweien (a'-a", b'-b") der Gasstrombohrungen (a', a", b', b") verbunden ist und diese miteinander in Kommunikation setzt, wobei das besagte Gasverteilungselement (5) zwei der besagten Verteilerplatten (4) versorgt, und zwar an jeder Seite eines, und dementsprechend auch zwei Gasdiffusionsschichten (2) und zwei Elektrolyten oder Katalysatormembranen (1) in zwei aneinander angrenzenden Modulen;
und wobei das besagte Gasverteilungselement (5) in einer Richtung breiter ist als die anderen Platten (3, 4), so dass, es, wenn es mit den anderen Platten (3, 4) gekuppelt ist, mit einer Kante (5.2) aus den anderen Platten (3, 4) hervorsteht, und die hervorstehende Kante (5.2) gezahnt oder gezackt ist (5.3).

2. Brennstoffzelle mit schichtweise angeordneten Modulen gemäß Patentanspruch 1, **dadurch gekennzeichnet, dass** die Rahmenplatte (3) eine rechteckige, mittlere Öffnung (3.1) hat, welche derart bemessen ist, dass sie den Bereich zwischen den besagten Gasstrombohrungen (A', A", B', B") einnimmt, und wobei die besagte mittlere Öffnung (3.1) derart konzipiert ist, dass sie beinahe die gesamte Oberfläche der sich zwischen den beiden Rahmenplatten (3) befindlichen und durch diese in Position gehaltenen Membran (1) zugänglich macht, und derart, dass sie die Gasdiffusionsschicht (2) enthält.

3. Brennstoffzelle mit schichtweise angeordneten Modulen gemäß Patentanspruch 2, **dadurch gekennzeichnet, dass** die Rahmenplatte (3) vorzugsweise aus Vetronit, Bakelit oder ähnlichem Material besteht und ungefähr einige Zehntelmillimeter dick ist.

4. Brennstoffzelle mit schichtweise angeordneten Modulen gemäß Patentanspruch 1, **dadurch gekennzeichnet, dass** die Verteilerplatte (4) im der mittleren Öffnung (3.1) der Rahmenplatte (3) entsprechenden Bereich mit kleinen Löchern (4.1) perforiert ist, und wobei die besagte Verteilerplatte (4) eine hoch leitfähige Metallschicht (4.2) an der zur Membran (1) zeigenden Seite aufweist und sich wenigstens über den gelochten Bereich (4.1) erstreckt, und wobei die besagte, hoch leitfähige Metallschicht (4.2) mit wenigstens einer elektrischen Anschlussklemme (4.3c) verbunden ist.

5. Brennstoffzelle mit schichtweise angeordneten Modulen gemäß Patentanspruch 4, **dadurch gekennzeichnet, dass** die leitfähige Metallschicht (4.2) mit einem elektrischen Prüfklemme (4.3t) verbunden ist.

6. Brennstoffzelle mit schichtweise angeordneten Modulen gemäß Patentansprüchen 4, 5, **dadurch gekennzeichnet, dass** die Kontaktklemmen (4.3c) und/oder Prüfklemmen (4.3t) vorzugsweise an einer oder an beiden kürzeren Seiten der Platte (4) angebracht sind.

7. Brennstoffzelle mit schichtweise angeordneten Modulen gemäß Patentansprüchen 4, 5, 6, **dadurch gekennzeichnet, dass** die besagte Verteilerplatte (4) aus elektrisch isolierendem und mit Platin, Gold oder mit einem anderen, leitfähigen Metall beschichtetem Material besteht.

8. Brennstoffzelle mit schichtweise angeordneten Modulen gemäß Patentansprüchen 4, 5, 6, **dadurch gekennzeichnet, dass** die besagte Verteilerplatte (4) an beiden Seiten der Anschlussklemme (4.3c) mit leitfähigen Metall (4.2) beschichtet ist und wobei besagte Anschlussklemmen wenigstens eine mittlere Bohrung (4.4) und metallbeschichtete Bohrungen (4.5) aufweisen, die den Kontakt zwischen den Beschichtungen (4.2) an den beiden Seiten der Klemmen (4.3c) gewährleisten, und wobei die Verbindung zwischen den einzelnen Verteilerplatten (4) durch zwischen den Anschlussklemmen (4.3c) der Verteilerplatten (4) befindliche und fest zwischen diesen gehaltene Verbindungselemente sichergestellt ist.

9. Brennstoffzelle mit schichtweise angeordneten Modulen gemäß Patentanspruch 1, **dadurch gekennzeichnet, dass** die besagte Verteilerplatte (4) keine hoch leitfähige Metallschicht (4.2) aufweist und dass die besagte Brennstoffzelle ein Zusatzelement (8) umfasst, das aus einem Blatt aus flexiblem, elektrisch isolierendem Material (8.1) besteht, welches in der Mitte ebensolche kleinen Löcher (8.2) aufweist wie die Verteilerplatte (4) und mit einer hoch leitfähigen Metallschicht (8.3) überzogen ist, wobei das besagte Zusatzelement (8) doppelt ausgeführt ist, d.h. aus zwei perforierten Blattabschnitten (8a, 8b) besteht, die der Form der Verteilerplatte (4) entsprechen und durch ein Band oder einen Streifen (8c) mit zwei Laschen (8.4a, 8.4b) miteinander verbunden sind, die sich an einer kürzeren Seite des Zusatzelements (8) und gegenüber dem Band oder einen Streifen (8c) befinden, und wobei die besagte hoch leitfähige Metallschicht (8.3) doppelt ist und sich an einer Seite eines Blatts (8a) befindet, und sich über das Verbindungsband oder den Verbindungsstreifen (8c) und die Lasche (8.4a) erstreckt, und sich an der anderen Seite des anderen Blatts (8b) wiederum über das Verbindungsband oder den Verbindungsstreifen (8c) und die Lasche (8.4b) erstreckt, wobei metallbeschichtete Bohrungen vorhanden sind und/oder in dem besagten Verbindungsband oder -streifen (8c) angebracht werden, um einen Kontakt zwischen den zwei Metallschichten (8.3) an den zwei Seiten (a, b) zu erzeugen, und wobei das besagte Zusatzelement (8) mit zwei Verteilerplatten (4) verbunden ist, wobei das besagte Zusatzelement (8) am Verbindungsband oder -streifen (8c) gebogen ist und für zwei Brennstoffzellenmodule benutzt wird, so dass dieselbe Serpentinenplatte (5) zwei Katalysatormembrane (1) in zwei aneinander angrenzenden Brennstoffzellenmodulen, ohne jegliche Platten oder Trennelemente (6, 7) zwischen den einzelnen Modulen versorgt.

10. Brennstoffzelle mit schichtweise angeordneten Modulen gemäß Patentanspruch ***1,* dadurch gekennzeichnet, dass** die besagten, über den Serpentinenkanal (5.1) verbundenen Gasstrombohrungen (A', A", B', B") sich nicht diagonal gegenüberliegen (A'-A", B'-B").

11. Brennstoffzelle mit schichtweise angeordneten Modulen gemäß Patentansprüchen 1, 10, **dadurch gekennzeichnet, dass** die Serpentinenplatte (5) aus einem ungefähr einige Zehntelmillimeter dicken Blatt aus Metall oder einem anderen, wärmeleitenden Metall besteht.

12. Brennstoffzelle mit schichtweise angeordneten Modulen gemäß vorstehenden Patentansprüchen, **dadurch gekennzeichnet, dass** sie eine weitere Abschlussplatte (6) umfasst, die lediglich die Bohrungen (A', A") für den Brenngasstrom und die Bohrungen (B', B") für den Strom des die Verbrennung fördernden Gases enthält, und wobei die besagten Bohrungen (A', A") und (B', B") jeweils auf die besagten Bohrungen (A', A") und (B'-B") der Platten (3, 4, 5) des Brennstoffzellenmoduls ausgerichtet sind.

13. Brennstoffzelle mit schichtweise angeordneten Modulen gemäß vorstehenden Patentansprüchen, **dadurch gekennzeichnet, dass** sie eine weitere Blindplatte (7) ohne die Gasstrombohrungen (A', A", B', B") umfasst.

14. Brennstoffzelle mit schichtweise angeordneten Modulen gemäß vorstehenden Patentansprüchen, **dadurch gekennzeichnet, dass** die Platten (3, 4, 5, 6, 7) an den Ecken Bohrungen (C) aufweisen, die das Zentrieren der einzelnen Platten (3, 4, 5, 6, 7) sowie den Einsatz mechanischer Mittel, die dafür sorgen, dass die besagten Platten (3, 4, 5, 6, 7) perfekt aneinander anliegen, ermöglichen und erleichtern.

15. Brennstoffzelle mit schichtweise angeordneten Modulen gemäß vorstehenden Patentansprüchen, **dadurch gekennzeichnet, dass** sie einen Film mit einem Loch in der Mitte umfasst, der als Dichtung zwischen jedem Paar der besagten Platten (3, 4, 5, 6, 7) dient.

## Revendications

1. Cellule à combustible avec modules superposés, chacun se composant d'une membrane electrolyte ou de catalyseur (1) avec, sur chaque côté, une couche de diffusion du gaz (2), une plaque de distribution (4, 8) agissant en tant qu'électrode, et au moins un élément de distribution du gaz (5) apte à faire en sorte que le gaz s'écoule sur la surface de la couche de diffusion du gaz (2) et sur toute la membrane (1), et où chaque module est accouplé avec des modules identiques, **caractérisée en ce que** les différentes plaques présentent au moins deux trous (a', a") pour l'écoulement du gaz combustible, et au moins deux trous (b', b") pour l'écoulement du gaz comburant, et quand les plaques (3, 4, 5) sont superposées l'une sur l'autre, les trous (a', a", b', b") forment des paires de cannaux (a'-a", b'-b") pour l'écoulement et le retour du gaz combustible (a', a") et du gaz comburant (b', b"), et chaque module de la cellule à combustible comprend, sur chaque côté de ladite membrane électrolyte ou de catalyseur (1) :
• ladite couche de diffusion du gaz (2) ;
• une plaque à cadre (3) ;
• ladite plaque de distribution (4), qui est perforée de petits trous (4.1) dans la zone correspondant à l'ouverture centrale (3.1) sur la plaque à cadre (3) ;
• ledit élément de distribution du gaz (5), qui comprend une modèle ou canal à serpentin (5.1) ouvert vers les deux côtés de ladite plaque à serpentin (5) et coïcidant avec l'ouverture centrale (3.1) sur la plaque à cadre (3), et où ledit canal à serpentin (5.1) s'unit et met en communication au moins deux (a'-a", b'-b") des trous d'écoulement du gaz (a', a", b', b"), ledit élément de distribution (5) servant deux desdites plaques de distribution (4), une sur chaque côté, et par conséquent aussi deux couches di diffusion du gaz (2) et deux membranes électrolyte ou de catalyseur (1) dans deux modules adjacents ;
et où ledit élément de distribution du gaz (5) est plus grand dans une direction que les autres plaques (3, 4) de manière à ce que, quand il est accouplé avec les autres plaques (3, 4), il présente un bord (5.2) saillant des autres plaques (3, 4), ledit bord saillant (5.2) étant denté ou crenelé (5.3).

2. Cellule à combustible avec modules superposés selon la revendication 1, **caractérisée en ce que** la plaque à cadre (3) présente une ouverture centrale rectangulaire (3.1) ayant une dimension telle à occuper la zone qui se trouve entre lesdits trous d'écoulement du gaz (A', A", B', B"), et où ladite ouverture centrale (3.1) est conçue pour garantir l'accès à presque toute la surface de la membrane (1) située entre celles-ci et retenue en position par les deux plaques à cadre (3), et pour contenir la couche de diffusion du gaz (2).

3. Cellule à combustible avec modules superposés selon la revendication 2, **caractérisée en ce que** la plaque à cadre (3) est préférablement réalisée en vétronite, bakélite ou un autre matériel similaire et a une épaisseur de quelques dixièmes de millimètre.

4. Cellule à combustible avec modules superposés selon la revendication 1, **caractérisée en ce que** la plaque de distribution (4) est perforée de petits trous (4.1) dans la zone correspondant à l'ouverture centrale (3.1) sur la plaque à cadre (3), et où ladite plaque de distribution (4) présente une couche de métal hautement conducteur (4.2) sur le côté tourné vers la membrane (1) et s'étendant au moins sur la zone couverte de trous (4.1), et où ladite couche de métal hautement conducteur (4.2) est reliée à au moins une borne de connexion électrique (4.3c).

5. Cellule à combustible avec modules superposés selon la revendication 4, **caractérisée en ce que** ladite couche de métal conducteur (4.2) est reliée à une borne d'épreuve électrique (4.3t).

6. Cellule à combustible avec modules superposés selon les revendications 4, 5 **caractérisée en ce que** lesdites bornes de contact (4.3c) et/ou lesdites bornes d'épreuve (4.3t) sont préférablement situées sur un ou deux des côtés plus courts de la plaque (4).

7. Cellule à combustible avec modules superposés selon les revendications 4, 5, 6 **caractérisée en ce que** ladite plaque de distribution (4) est réalisée en matériel électriquement isolant revêtu de platine, or ou un autre métal conducteur.

8. Cellule à combustible avec modules superposés selon les revendications 4, 5, 6 **caractérisée en ce que** ladite plaque de distribution (4) présente les deux côtés de la borne de connexion (4.3c) revêtus de métal conducteur (4.2), et où lesdites bornes de connexion présentent au moins un trou central (4.4) et des trous revêtus de métal (4.5) garantissant le contact entre les revêtements (4.2) sur les deux côtés desdites bornes (4.3c), et où la connexion entre les différentes plaques de distribution (4) est garantie par des éléments de connexion disposés et serrés parmi les bornes de connection (4.3c) sur lesdites plaques de distribution (4).

9. Cellule à combustible avec modules superposés selon la revendication 1, **caractérisée en ce que** ladite plaque de distribution (4) ne présente pas de couche de métal hautement conducteur (4.2) et ladite cellule à combustible comprend un élément supplémentaire (8) consistant en une feuille de matériel électriquement isolant (8.1), perforée de petits trous au centre (8.2) exactement de la même façon que ladite plaque de distribution (4), revêtue d'une couche de matériel hautement conducteur (8.3), ledit élément supplémentaire (8) étant réalisé double, c'est-à-dire qu'il consiste en deux portions ou feuilles perforées (8a, 8b) correspondant à la forme de ladite plaque de distribution (4), reliées par un collier ou une bande (8c), avec deux languettes (8.4a, 8.4b) situées sur un côté plus court de l'élément supplémentaire (8) et opposées au collier ou à la bande (8c) et où ladite couche de métal hautement conducteur (8.3) est double, et est positionnée, sur un côté d'une feuille (8a), s'étendant sur le collier ou bande de connexion (8c) et la languette (8.4a), et sur l'autre côté de l'autre feuille (8b), s'étendant encore sur le collier ou bande de connexion (8c) et la languette (8.4b), des trous revêtus de métal étant disposés et/ou créés dans ledit collier ou bande de connexion (8c) de manière à créer un contact entre les deux couches de métal (8.3) sur les deux côtés (a, b), et où ledit élément supplémentaire (8) est relié à deux plaques de distribution (4), ledit élément supplémentaire (8) étant plié sur le collier ou bande de connexion (8c) et utilisé pour deux modules de la cellule à combustible, de façon à ce que la même plaque à serpentin (5) sert deux membranes de catalyseur (1) en deux modules adjacents de la cellule à combustible, sans aucune plaque ou élément séparateur (6, 7) entre les différents modules.

10. Cellule à combustible avec modules superposés selon la revendication 1, **caractérisée en ce que** lesdits trous d'écoulement gazeux (A', A", B', B") reliés par le canal à serpentin (5.1) ne sont pas diagonalement opposés l'un à l'autre (A'-A", B'-B").

11. Cellule à combustible avec modules superposés selon les revendications 1, 10 **caractérisée en ce que** la plaque à serpentin (5) se compose d'une feuille de métal ou un autre matériel conducteur de chaleur avec une épaissuer approximative de quelques dixièmes de millimètre.

12. Cellule à combustible avec modules superposés selon les revendications précédentes, **caractérisée en ce qu'**elle comprend une plaque finale supplémentaire (6), qui ne contient que des trous (A', A") pour l'écoulement du gaz combustible et les trous (B', B") pour l'écoulement du gaz comburant, et où lesdits trous (A', A") et (B', B") sont alignés respectivement avec lesdits trous (A', A") et (B'-B") desdites plaques (3, 4, 5) du module de la cellule à combustible.

13. Cellule à combustible avec modules superposés selon les revendications précédentes, **caractérisée en ce qu'**elle comprend une plaque aveugle supplémentaire (7) sans les trous d'écoulement du gaz (A', A", B', B").

14. Cellule à combustible avec modules superposés selon les revendications precedentes, **caractérisée en ce que** les plaques (3, 4, 5, 6, 7) présentent des trous (C) aux coins aptes à permettre et faciliter le centrage desdites plaques différentes (3, 4, 5, 6, 7) et l'insertion de moyens mécaniques pour permettre que lesdites plaques (3, 4, 5, 6, 7) adhèrent perfectement entre elles.

15. Cellule à combustible avec modules superposés selon les revendications précédentes, **caractérisée en ce qu'**elle présente une pellicule de jonction avec un trou au centre insérée entre chaque paire desdites plaques (3, 4, 5, 6, 7).
